# EUROPEAN PATENT SPECIFICATION

(11) **EP 0 690 255 B1**
(45) Date of publication and mention of the grant of the patent: **04.08.1999**
(21) Application number: 95303087.1
(22) Date of filing: 05.05.1995
(51) Int. Cl.: F16L 9/147, F16L 11/14, F16L 58/10

(54) **Pipes for fluid flow and methods of making them**
Durchflussrohre und ihre Herstellungsverfahren
Tuyaux pour l'écoulement de fluide et leurs procédés de fabrication

(30) Priority: 01.07.1994 GB 9413285
(43) Date of publication of application: 03.01.1996
(73) Proprietor: DRAFTEX INDUSTRIES LIMITED, Edinburgh EH2 3AP, Scotland (GB)
(72) Inventor: Ausias, Gilles, F-44470 Carquefou (FR); Beurrier, Jean-Maurice, F-44100 Nantes (FR)
(74) Representative: Foster, David Martyn

(56) References cited:
- WO-A-88/03421
- DE-C- 4 400 811
- FR-A- 2 398 952
- FR-A- 2 516 443
- GB-A- 2 044 390
- US-A- 4 071 048
- US-A- 4 966 202

## Description

The invention relates to a pipe for the transfer of fluid, comprising an outer tube made of polymeric material by extrusion, and tubular metal positioned within the outer tube. The invention also relates to a method of making a pipe for the transport of fluid, comprising the step of incorporating tubular metal into an outer tube made of polymeric material by extruding the polymeric material onto the tubular metal through the die of a cross-head extruder.

Such a pipe and method are known from US-A-4 071 048. In this case, the pipe is constructed by forming a metal tube and then melt-extruding a polymer through an extruder equipped with a cross-head die onto the outside of the heated tube and cooling the coating as rapidly as possible. The process involves several separate stages.

The known pipe is also shown in GB-A-821 899. In this case, a steel mandrel is used as a base for a pipe, the pipe being formed by sheets of polymer material which are wound around the mandrel. The mandrel may be in the form of a steel pipe which may or may not be left in position.

In WO-A-87-00147, a fuel pipe and method of making it are disclosed in which a nylon liner has an aluminium strip formed around it. The aluminium strip has a polyethylene outer layer extruded onto it. The manufacturing process involves several separate stages.

The known pipes may have insufficient flexibility for some applications. Furthermore, it is desirable to make the outer tube from two different materials having complementary characteristics. The invention aims to deal with these problems.

According to the invention, the known pipe as first set forth above is characterised in that the tubular metal comprises a plurality of tubular metallic inserts positioned within the outer tube and being incorporated into the pipe at respective predetermined regions spaced apart along the length thereof by inserting them into the extruder so that the polymeric material is extruded over it in those regions of the pipe, and in that the outer tube is constituted by a plurality of concentric tubular layers of extruded polymeric material, at least one of the tubular layers having a first thickness over each part of the pipe where each metallic insert is absent and a second, lesser, thickness over each said region of the pipe.

According to the invention, the known method as first set forth above is characterised in that the tubular metal comprises a plurality of tubular metallic inserts, and by the steps of feeding the tubular metallic inserts into the cross-head extruder at respective predetermined times during the extrusion process so that the metallic inserts become incorporated into the pipe at respective particular regions therealong, the step of extruding the polymeric material comprising the step of simultaneously extruding different polymeric materials so that the outer tube is constituted by a plurality of concentric tubular layers of the different polymeric materials, at least one of the tubular layers being formed with a first thickness over each part of the pipe where each metallic insert is absent and a second, lesser, thickness over each said region.

In this way, the separation of the metallic inserts provides flexibility for the pipe, while the varying thickness of one of the polymeric layers avoids thickening of the pipe in the regions having the inserts.

Pipes embodying the invention, and methods according to the invention of making pipes, will now be described, by way of example only, with reference to the accompanying diagrammatic drawings in which:
Figure 1 is a cross-section through one of the pipes;
Figure 2 is a cross-section through another of the pipes;
Figures 3 and 4 are half cross-sections, to an enlarged scale, corresponding to Figure 2 but showing different possible forms at the ends of the pipe; and
Figure 5 is a schematic view of one of the pipes fitted to a motor vehicle.

The pipes to be described in more detail below are intended for transporting fuel in a motor vehicle. However, they can be used for many other purposes, not limited to motor vehicles.

The pipes to be described can be used for transporting fuel from a vehicle's fuel tank to the engine, and for transporting surplus fuel back to the fuel tank.

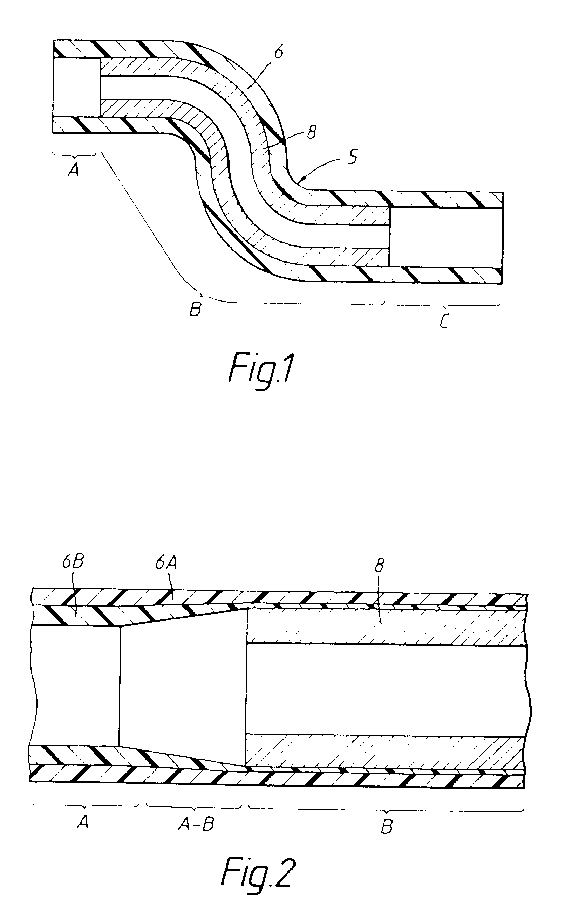

In Figure 1, the pipe 5, comprises a first region A which in this example is substantially straight, a second region B which is of "S" shape, and a third region C which is substantially straight.

The pipe 5 of Figure 1 has an outer tube 6 made of polymeric material 6 such as thermoplastic material (a polyamide, for instance) or an elastomer. The tube 6 is produced by extrusion. Over the regions A and C, the pipe consists only of the tube 6.

Over the region B, however, a metal tube 8 is inserted within the tube 5.

The regions A and C, consisting only of the polymeric material of the tube 6, are flexible and can be mounted onto connecting stubs in the usual manner, being clamped or otherwise suitably fixed in position. Regions A and C thus enable the pipe 5 to absorb relative movement and vibration between the two end stubs.

Over the region B, the pipe 5, incorporating the metal tube 8, can be easily bent into a desired shape which is thereafter retained, an "S" shape being shown purely by way of example in Figure 1; clearly, other shapes can be adopted.

The region B can constitute a substantial part of the total length of the pipe 5, the regions A and C (which are free of the metal tube 8) providing flexible ends for attaching the pipe in position. The metal tube 8 is advantageous because it enables the region B of the pipe to be bent into a required shape which the pipe subsequently retains. In the absence of the metal tube 8, the region B of the pipe 5 could only be set into a desired bent configuration with difficulty: it would be necessary to heat the tube 6, bend it into the required form, and then hold it in this form until it cools again. This process is time-consuming and relatively costly, and these disadvantages are avoided by using the metal tube 8. In addition, the provision of the metal tube 8 greatly improves the fire resistance of the pipe 5 as compared with a pipe consisting only of a thermoplastic tube. The metal tube 8 is also impermeable to fuel and this is a further advantage, particularly as compared with a pipe consisting only of an elastomeric tube which has a low impermeability to fuel.

On the other hand, a pipe consisting only of a metal tube is disadvantageous because the required thickness renders the metal tube expensive. In addition, it does not absorb vibration well and is easily corroded. These disadvantages are avoided by incorporating the metal tube 8 inside the thermoplastic or elastomeric tube 6.

Advantageously, the metal of the tube 8 is a metal alloy.

Figure 2 shows another of the pipes. In this case, the pipe 5 has a region A, a region B and a transition region A-B, the regions all being straight in this example.

The pipe 5 has two outer layers 6A and 6B formed by concentric tubes and advantageously made of polymeric material. The external layer of tube 6A may, for example, be produced (by extrusion) from a material having good resistance to heat. The inner layer or tube 6B, again produced by extrusion, is advantageously made from polymeric material having good impermeability to fuel.

Over the region B, the outer layers or tubes 6A and 6B are complemented by a metal tube or insert 8, advantageously made of a metal alloy. The use of the metal tube or insert A produces all the advantages specified above.

As shown in Figure 2, the thicknesses of the layers or tubes 6A and 6B can vary along the length of the pipe. Thus, within region A, the inner layer or tube 6B is relatively thick, whereas it is relatively thin over the region B, the thickness gradually decreasing over the transition region A-B. The length of this transition region will depend on the type of process used for producing the pipe.

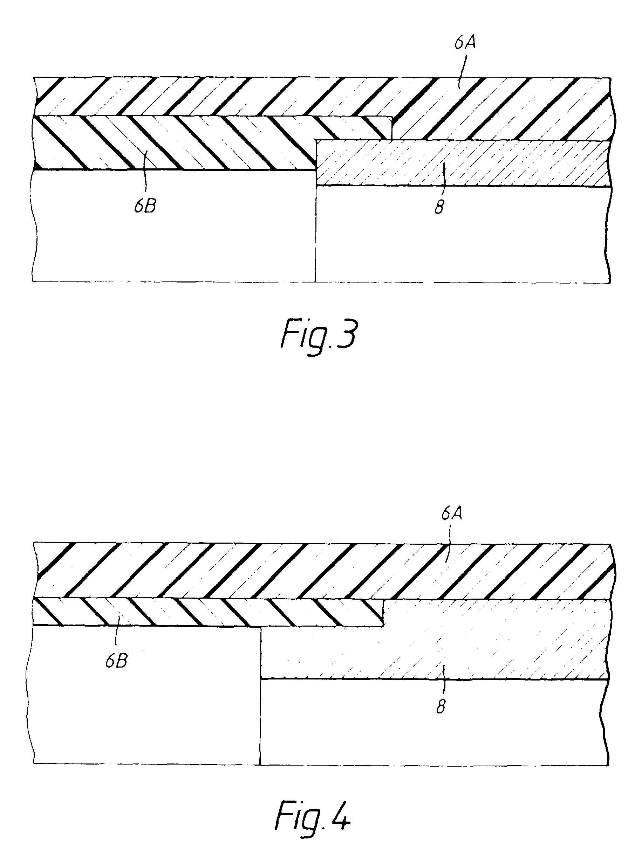

Figure 3 shows a modification of the arrangement shown in Figure 2. In Figure 3, the inner layer or tube 6B has an end portion 6C of reduced thickness which overlaps the end of the metal insert 8 and the outer tube 6A is of correspondingly stepped thickness.

In Figure 4, the outer and inner tubes 6A,6B are of constant thickness, but the end of the metal tube 8 is stepped to receive an overlapping portion 6C of the inner tube 6B.

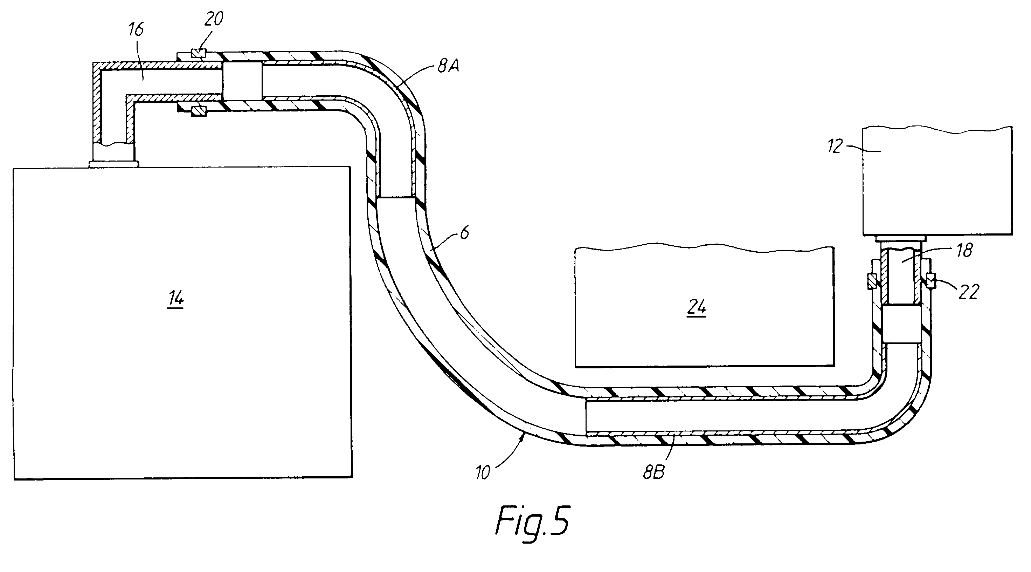

There may be several metal tubes or inserts positioned at intervals along the length of the pipe. Such an arrangement is shown by way of example in Figure 5 which illustrates a pipe 10 conveying fuel from a fuel tank 12 in a motor vehicle to its engine 14. The pipe 10 is constructed as in Figure 1 and has two separated metal inserts 8A and 8B. Each end of the pipe 10 is secured to a fixed pipe stub 16,18 by a suitable clamp 20,22.

The pipe 10 passes under the vehicle's bodywork indicated generally at 24.

In accordance with a feature of the invention, the pipes illustrated are manufactured using a known-form of cross-head extruder, the metal tube being inserted into the extruder through the appropriately shaped die and the polymeric or similar material being fed in through the cross-head so as to be extruded around the metal tube. It will be understood that the metal tube is, where required, in discontinuous form, the separate tube pieces being presented to the extruder under control of a predetermined programme responsive to the speed of the extruder so that the tube pieces are positioned at the appropriate locations along the length of the pipe. In the case where two concentric layers are extruded and one is plastics material and the other rubber, care needs to be taken to ensure that the vulcanising step for vulcanising the rubber does not damage the plastics material. For example, special vulcanising agents may be needed to ensure that vulcanisation can take place at a sufficiently low temperature.

## Claims

1. A pipe for the transfer of fluid, comprising an outer tube (6;6A,6B) made of polymeric material by extrusion, and tubular metal (8;8A,8B) positioned within the outer tube (6;6A,6B), characterised in that the tubular metal comprises a plurality of tubular metallic inserts positioned within the outer tube (8;8A,8B) and being incorporated into the pipe at respective predetermined regions spaced apart along the length thereof by inserting them into the extruder so that the polymeric material is extruded over it in those regions of the pipe, and in that the outer tube is constituted by a plurality of concentric tubular layers of extruded polymeric material, at least one of the tubular layers having a first thickness over each part of the pipe where each metallic insert is absent and a second, lesser, thickness over each said region of the pipe.

2. A pipe according to claim 1, characterised in that the thickness of the said one tubular layer (6B) varies progressively between the first and second thicknesses.

3. A pipe according to claim 1 or 2, characterised in that the regions incorporating metallic inserts (8;8A,8B) are bent into a predetermined configuration.

4. A pipe according to any preceding claim, characterised in that each metallic insert (8;8A,8B) is made of a metal alloy.

5. A pipe according to any preceding claim, characterised in that the end parts of the pipe are free of the said metallic inserts (8;8A,8B).

6. A method of making a pipe for the transport of fluid, comprising the step of incorporating tubular metal (8;8A,8B) into an outer tube (6;6A,6B) made of polymeric material by extruding the polymeric material onto the tubular metal through the die of a cross-head extruder, characterised in that the tubular metal comprises a plurality of tubular metallic inserts, and by the steps of feeding the tubular metallic inserts (8;8A,8B) into the cross-head extruder at respective predetermined times during the extrusion process so that the metallic inserts (8;8A;8B) become incorporated into the pipe at respective particular regions therealong, the step of extruding the polymeric material comprising the step of simultaneously extruding different polymeric materials so that the outer tube is constituted by a plurality of concentric tubular layers of the different polymeric materials, at least one of the tubular layers being formed with a first thickness over each part of the pipe where each metallic insert is absent and a second, lesser, thickness over each said region.

7. A method according to claim 6, characterised by the step of bending at least one of the regions incorporating the metallic inserts (8A,8B).

## Patentansprüche

1. Rohr für den Durchfluß von Flüssigkeiten mit einem äußeren, durch Extrudieren aus einem Polymermaterial hergestellten Rohr (6; 6A, 6B) und innerhalb des äußeren Rohres (6; 6A, 6B) angeordnetem rohrförmigem Metall (8; 8A, 8B),
**dadurch gekennzeichnet,**
daß das rohrförmige Metall eine Vielzahl rohrförmiger metallischer Einlagen umfaßt, die innerhalb des äußeren Rohres (6; 6A, 6B) angeordnet sind und in das Rohr an verschiedenen vorbestimmten Bereichen voneinander beabstandet entlang der Länge des Rohres durch Einfügen in den Extruder so eingearbeitet sind, daß das Polymermaterial in diesen Bereichen des Rohres über diese Einlagen extrudiert wird und dadurch, daß das äußere Rohr aus einer Vielzahl konzentrischer rohrförmiger Schichten aus extrudiertem Polymermaterial gebildet ist, wobei zumindest eine dieser rohrförmigen Schichten eine erste Dicke über jeden Teil des Rohres aufweist, an der keine metallischen Einlagen vorhanden sind, sowie eine zweite, geringere Dicke über jeden der Bereiche mit metallischer Einlage aufweist.

2. Rohr nach Anspruch 1, dadurch gekennzeichnet, daß die Dicke der einen rohrförmigen Schicht (6B) stufenweise zwischen der ersten und zweiten Dicke variiert.

3. Rohr nach Anspruch 1 oder 2, dadurch gekennzeichnet, daß die Bereiche, in die metallische Einlagen (8; 8A, 8B) eingearbeitet sind, in vorbestimmte Konfigurationen gebogen sind.

4. Rohr nach einem der vorhergehenden Ansprüche, dadurch gekennzeichnet, daß jeder metallische Einsatz (8; 8A, 8B) aus einer Metallegierung besteht.

5. Rohr nach einem der vorhergehenden Ansprüche, dadurch gekennzeichnet, daß die Endbereiche des Rohres frei von den metallischen Einlagen (8; 8A, 8B) sind.

6. Verfahren zur Herstellung eines Rohres für den Durchfluß von Flüssigkeiten umfassend den Verfahrensschritt Einarbeiten von rohrförmigem Metall (8; 8A, 8B) in ein äußeres, aus einem Polymermaterial hergestelltes Rohr (6; 6A, 6B) durch Extrudieren des Polymermaterials durch die Spritzgußform eines Kreuzkopf (cross-head)-Extruders auf das rohrförmige Metall,
**dadurch gekennzeichnet,**
daß das rohrförmige Metall eine Vielzahl von rohrförrnigen metallischen Einlagen aufweist und gekennzeichnet durch die Verfahrensschritte Zuführen der rohrförmigen metallischen Einlagen (8; 8A, 8B) in den Kreuzkopf-Extruder zu verschiedenen vorbestimmten Takten während des Extrudierprozesses, so daß die metallischen Einlagen (8; 8A, 8B) entlang dem Rohr an verschiedenen vorbestimmten Bereichen in das Rohr eingearbeitet werden, den Verfahrensschritt Extrudieren des Polymermaterials, beinhaltend den Verfahrensschritt des gleichzeitigen Extrudierens verschiedener Polymermaterialien, so daß das äußere Rohr durch ein Vielzahl konzentrischer rohrförmiger Schichten aus verschiedenen Polymermaterialien gebildet wird, wobei zumindest eine der rohrförmigen Schichten mit einer ersten Dicke über jeden Teil des Rohres gebildet wird, an dem jede metallische Einlage fehlt, sowie mit einer zweiten, geringeren Dicke über jeden Bereich mit metallischer Einlage gebildet wird.

7. Verfahren nach Anspruch 6, gekennzeichnet durch den Verfahrensschritt Biegen zumindest eines der Bereiche, in die die metallischen Einlagen (8A, 8B) eingearbeitet sind.

## Revendications

1. Conduite de transfert d'un fluide, comprenant un tube externe (6 ; 6A, 6B) formé d'un matériau polymère par extrusion, et un métal tubulaire (8 ; 8A, 8B) placé à l'intérieur du tube externe (6 ; 6A, 6B), caractérisée en ce que le métal tubulaire comprend plusieurs éléments métalliques rapportés tubulaires positionnés dans le tube externe (8 ; 8A, 8B) et incorporés à la conduite dans des régions prédéterminées respectives espacées sur sa longueur par insertion dans l'extrudeuse de manière que la matière polymère soit extrudée sur la conduite dans ces régions, et en ce que le tube externe est constitué de plusieurs couches tubulaires concentriques d'une manière polymère extrudée, l'une au moins des couches tubulaires ayant une première épaisseur sur chaque partie de conduite dans laquelle chaque élément métallique rapporté est absent et une seconde épaisseur plus faible sur chaque région de la conduite.

2. Conduite selon la revendication 1, caractérisée en ce que l'épaisseur de la couche tubulaire (6B) varie progressivement entre la première et la seconde épaisseur.

3. Conduite selon la revendication 1 ou 2, caractérisée en ce que les régions comprenant les éléments métalliques rapportés (8 ; 8A, 8B) sont cintrés à une configuration prédéterminée.

4. Conduite selon l'une quelconque des revendications précédentes, caractérisée en ce que chaque élément métallique rapporté (8 ; 8A, 8B) est formé d'un alliage métallique.

5. Conduite selon l'une quelconque des revendications précédentes, caractérisée en ce que les parties d'extrémité de la conduite sont dépourvues d'élément métallique rapporté (8 ; 8A, 8B).

6. Procédé de fabrication d'une conduite de transport d'un fluide, comprenant des étapes d'incorporation d'un métal tubulaire (8 ; 8A, 8B) dans un tube externe (6 ; 6A, 6B) formé d'une matière polymère par extrusion de la matière polymère sur le métal tubulaire à l'aide de la filière d'une extrudeuse à tête transversale, caractérisé en ce que le métal tubulaire comprend plusieurs éléments métalliques rapportés tubulaires, et le procédé comprend les étapes d'avance des éléments rapportés métalliques tubulaires (8 ; 8A, 8B) dans l'extrudeuse à tête transversale à des moments respectifs prédéterminés pendant l'opération d'extrusion afin que les éléments métalliques rapportés (8 ; 8A ; 8B) soient incorporés à la conduite dans des régions particulières respectives le long de celle-ci, l'étape d'extrusion de la matière polymère comprenant l'étape d'extrusion simultanée de différentes matières polymères afin que le tube externe soit constitué de plusieurs couches tubulaires concentriques de matières polymères différentes, l'une au moins des couches tubulaires étant formée avec une première épaisseur sur chaque partie de la conduite où chaque élément métallique rapporté est absent et une seconde épaisseur plus faible sur lesdites régions.

7. Procédé selon la revendication 6, caractérisé par l'étape de cintrage de l'une au moins des régions comprenant les éléments métalliques rapportés (8A, 8B).
